# EUROPÄISCHE PATENTSCHRIFT

(11) **EP 3 158 117 B1**
(45) Veröffentlichungstag und Bekanntmachung des Hinweises auf die Patenterteilung: **10.03.2021**
(21) Anmeldenummer: 15730065.8
(22) Anmeldetag: 16.06.2015
(51) Int. Cl.: F27D 19/00, D02J 13/00, F27B 9/28, D01F 9/32

(54) **OXIDATIONSOFEN**
OXIDATION FURNACE
FOUR D'OXYDATION

(30) Priorität: 20.06.2014 DE 102014009243
(43) Veröffentlichungstag der Anmeldung: 26.04.2017
(73) Patentinhaber: ONEJOON GmbH, 37120 Bovenden (DE)
(72) Erfinder: MEINECKE, Lars, 72770 Reutlingen (DE)
(74) Vertreter: Ostertag & Partner Patentanwälte mbB
(86) Internationale Anmeldenummer: PCT/EP2015/001214
(87) Internationale Veröffentlichungsnummer: WO 2015/192961

(56) Entgegenhaltungen:
- DE-B3-102011 010 298
- US-A- 4 545 762
- US-A1- 2013 167 397
- US-B1- 6 776 611

## Beschreibung

Die Erfindung betrifft einen Oxidationsofen zur oxidativen Behandlung von Fasern, insbesondere zur Herstellung von Kohlenstofffasern, mit
a) einem Gehäuse, welches abgesehen von Durchtrittsbereichen für die Fasern gasdicht ist;
b) einem im Innenraum des Gehäuses befindlichen Prozessraum;
c) einer Atmosphäreneinrichtung, mit welcher eine heiße Arbeitsatmosphäre erzeugbar und in den Prozessraum einblasbar ist, die den Prozessraum unter Prozessbedingungen in einer Hauptströmungsrichtung durchströmt;
d) Umlenkrollen, welche die Fasern als Faserteppich nebeneinander liegend serpentinenartig durch den Prozessraum führen, wobei der Faserteppich zwischen gegenüber liegenden Umlenkrollen jeweils eine Ebene aufspannt.

Bei derartigen, am Markt bekannten Oxidationsöfen für die Herstellung von Kohlenstofffasern gibt es im Wesentlichen zwei Prozessparameter, welche die Qualität der erhaltenden Fasern hauptsächlich beeinflussen. Zum einen ist dies die Temperatur im Prozessraum, d.h. also die Temperatur der Arbeitsatmosphäre, zum anderen ist dies die Geschwindigkeit, mit welcher die Arbeitsatmosphäre den Prozessraum durchströmt.

Diese beiden Prozessparameter sollten über den gesamten Prozessablauf innerhalb geringer Toleranzen nach Prozessvorgaben aufrechterhalten werden, um sowohl eine gleichbleibende Faserqualität als auch eine hohe Prozesssicherheit zu gewährleisten.

Ein Strömungsprofil über die Strömungsgeschwindigkeit der Arbeitsatmosphäre im Prozessraum wurde bislang in kaltem Betriebszustand des Oxidationsofens, beispielsweise bei dessen Inbetriebnahme, erstellt. Ausgehend von diesem "Kaltprofil" wurde ein Strömungsprofil unter Prozessbedingungen berechnet.

Unter Prozessbedingungen beträgt die Temperatur im Prozessraum eines Oxidationsofens bis zu 300°C und es werden toxische und/oder brennbare Gase, aber auch SiO₂- und Faserpartikel freigesetzt. Zudem kann es bei einer ungleichmäßigen Wärmeverteilung im Prozessraum in kühleren Bereichen zu einer Bildung von Teerkondensat kommen. Die Praxis hat gezeigt, dass es auch durch die Änderung der Bedingungen im Prozessraum vom Zustand der Inbetriebnahme zum laufenden Prozess zu großen Abweichungen zwischen dem berechneten Strömungsprofil und dem unter Prozessbedingungen tatsächlich vorliegenden Strömungsprofil kommen kann, so dass die Qualität der Faser nicht immer mit den Erwartungen übereinstimmt.

Der Stand der Technik in Bezug auf die Erfindung ist in US 6 776 611 und US 4 545 762 A zu finden.

Es ist Aufgabe der Erfindung, einen Oxidationsofen der eingangs genannten Art zu schaffen, welcher diesen Gedanken Rechnung trägt.

Diese Aufgabe wird bei einem Oxidationsofen der eingangs genannten Art dadurch gelöst, dass
e) ein Strömungsmesssystem vorhanden ist, mittels welchem unter Prozessbedingungen ein Strömungsprofil der Arbeitsatmosphäre erstellbar ist und welches wenigstens eine Sensoreinrichtung zur Ermittlung der Strömungsgeschwindigkeit umfasst, welche in einem Sensorbereich zwischen zwei benachbarten Faserteppichen angeordnet ist.

Der Erfindung liegt die Erkenntnis zu Grunde, dass es möglich ist, ein Sensorsystem zu etablieren, welches den Prozessbedingungen im Prozessraum standhält und zuverlässig Daten über die Strömungsgeschwindigkeiten der Arbeitsatmosphäre auch im laufenden Prozess unter Prozessbedingungen liefert.

Grundsätzlich soll ein Strömungsprofil in Richtung senkrecht zu den Faserteppichen, d.h. in der Regel über die Vertikale des Prozessraumes, erstellt werden. In diesem Fall sind in vertikaler Richtung mehrere Sensorbereiche vorgesehen. Vorzugsweise ist die Sensoreinrichtung jedoch derart eingerichtet, dass unterschiedliche Strömungsgeschwindigkeiten der Arbeitsatmosphäre im Sensorbereich quer zur Hauptströmungsrichtung erfassbar sind. Wenn mehrere solcher Sensoreinrichtungen in vertikaler Richtung verteilt sind, kann ein informationsstarkes Rasterströmungsprofil über den Querschnitt des Prozessraumes erstellt werden.

Als besonders effektiv unter Prozessbedingungen hat es sich herausgestellt, wenn die wenigstens eine Sensoreinrichtung als Differenzdruck-Sensoreinrichtung ausgebildet ist.

Dabei ist es von Vorteil, wenn die wenigstens eine Differenzdruck-Sensoreinrichtung eine Stausonde und eine Sonde für den statischen Druck umfasst.

Eine besonders vorteilhafte Ausbildung der Sensoreinrichtung wird erreicht, wenn
a) die Stausonde wenigstens ein Staurohr mit einem geschlossenen Ende und einem Messende umfasst und die Sonde für den statischen Druck wenigstens ein Referenzrohr mit einem geschlossenen Ende und einem Messende umfasst, wobei an den Messenden ein Staudruck und ein statischer Referenzdruck erfassbar sind;
b) sich das Staurohr und das Referenzrohr im Sensorbereich quer zur Hauptströmungsrichtung der Arbeitsatmosphäre und in einem Messabstand parallel zueinander erstrecken;
c) das Staurohr Öffnungen aufweist und so angeordnet ist, dass die Öffnungen in Richtung entgegen der Hauptströmungsrichtung der Arbeitsatmosphäre weisen;
d) das Referenzrohr Öffnungen aufweist und so in Hauptströmungsrichtung der Arbeitsatmosphäre hinter dem Staurohr angeordnet ist, dass die Öffnungen von dem Staurohr weg weisen.

Um Turbulenzen an der Differenzdruck-Sensoreinrichtung zu verringern, ist es günstig, wenn diese eine Einhausung umfasst, welche das Staurohr und das Referenzrohr abgesehen von deren Öffnungen einhüllt.

Mit Blick auf ein oben angesprochenes Rasterströmungsprofil ist es vorteilhaft, wenn die Stausonde mehrere Messabschnitte und die Sonde für den statischen Druck mehrere Messabschnitte umfasst.

Bevorzugt sind die Messabschnitte durch Messkammern ausgebildet, die jeweils an ihrer vom geschlossenen Ende abliegenden Stirnseite über eine Hohlleitung in Messanschlüsse am Messende münden.

Ein symmetrischer Aufbau wird erreicht, wenn die Hohlleitungen koaxial zueinander und zu den Messkammern verlaufen.

Alternativ können die Messabschnitte dadurch ausgebildet sein, dass mehrere Staurohre oder Referenzrohre vorhanden sind, die unterschiedlich lang und aneinanderliegend derart angeordnet sind, dass jeweils ein Messabschnitt am geschlossenen Ende des jeweiligen Staurohrs oder Referenzrohrs mit Öffnungen im Prozessraum liegt.

Die mehreren Staurohre oder Referenzrohre können geradlinig oder gewinkelt sein. Wenn sie gewinkelt sind, können sie derart verschachtelt werden, dass der Strömung eine Auftrefffläche weitgehend ohne Stufe oder dergleichen geboten wird, so dass Turbulenzen vermieden werden.

Wenn wenigstens eine Sensoranordnung mit mehreren Sensoreinrichtungen vorhanden ist, die in mehreren Sensorbereichen zwischen verschiedenen benachbarten Faserteppichen angeordnet sind, kann vorteilhaft ein Profil in Richtung senkrecht zu den Faserteppichen, in der Regel also in vertikaler Richtung erstellt werden.

Wenn wenigsten eine Sensoranordnung mit mehreren Sensoreinrichtungen vorhanden ist, die in benachbarten Sensorzonen eines Sensorbereichs angeordnet sind, kann das Strömungsprofil in Strömungsrichtung verfeinert werden.

Wenn mehrere Sensoreinrichtungen über eine Ventileinrichtung mit einer Gruppenmesseinheit verbunden und sequenziell auswertbar sind, kann eine Große Anzahl an Druckmesseinheiten und Druckwandlern eingespart werden. In diesem Fall wird ein Strömungsprofil sukzessive aufgebaut, indem mehrere Sensoreinrichtungen zeitlich aufeinanderfolgend abgerufen und die erhaltenen Werte zu einem Strömungsprofil zusammengefügt werden.

Mit Blick auf gängige Strömungskonzepte ist es günstig, wenn der Prozessraum mehrere Prozessraumabschnitte aufweist, in welchen die Arbeitsatmosphäre mit unterschiedlichen Hauptströmungsrichtungen strömt, wobei deren Strömungsprofil durch das Strömungsmesssystem jeweils gesondert erstellbar ist. Dies trägt zum Beispiel dem so genannten "center-to-end"-Prinzip bei Oxidationsöfen Rechnung.

Um die strömende Arbeitsatmosphäre gezielt zu einer Sensoreinrichtung zu leiten, ist es günstig, wenn in einem Sensorbereich zwischen zwei benachbarten Faserteppichen Luftleitelemente vorhanden sind, durch welche die Arbeitsatmosphäre in Richtung auf die Sensoreinrichtung gebündelt wird.

Nachstehend werden Ausführungsbeispiele der Erfindung anhand der Zeichnungen näher erläutert. In diesen zeigen:
- Figur 1: einen Vertikalschnitt durch einen Oxidationsofen zur Herstellung von Kohlenstofffasern in Ofenlängsrichtung mit einem Strömungsmesssystem, welches eine Sensoranordnung mit mehrere Differenzdruck-Sensoreinrichtungen umfasst;
- Figur 2: einen perspektivischen Detailausschnitt der Sensoranordnung des Oxidationsofens mit Differenzdruck-Sensoreinrichtungen gemäß einem ersten Ausführungsbeispiel;
- Figur 3: einen Detailvergrößerung von Figur 1 mit der Differenzdruck-Sensoreinrichtung von Figur 2;
- Figur 4: einen perspektivischen Detailausschnitt der Sensoranordnung des Oxidationsofens mit Differenzdruck-Sensoreinrichtungen gemäß einem zweiten Ausführungsbeispiel;
- Figur 5: eine der Figur 3 entsprechende Detailvergrößerung von Figur 1 mit der Differenzdruck-Sensoreinrichtung von Figur 4;
- Figur 6: eine den Figuren 3 und 5 entsprechende Detailvergrößerung von Figur 1 mit eine abgewandelten Sensoranordnung;
- Figur 7: eine den Figuren 3, 5 und 6 entsprechende Detailvergrößerung von Figur 1, wobei die Sensoranordnung Strömungsleitelemente umfasst;
- Figur 8: einen den Figuren 2 und 4 entsprechenden perspektivischen Detailausschnitt einer Sensoranordnung, die Differenzdruck-Sensoreinrichtungen umfasst, mit denen Strömungsunterschiede quer zur Strömungsrichtung erfassbar sind;
- Figuren 9 bis 12: vier Ausführungsbeispiele von Differenzdruck-Sensoreinrichtungen für diese Sensoranordnung;
- Figur 13: schematisch eine Steuerschaltung zur sequenziellen Erfassung von Messbereichen im Oxidationsofen.

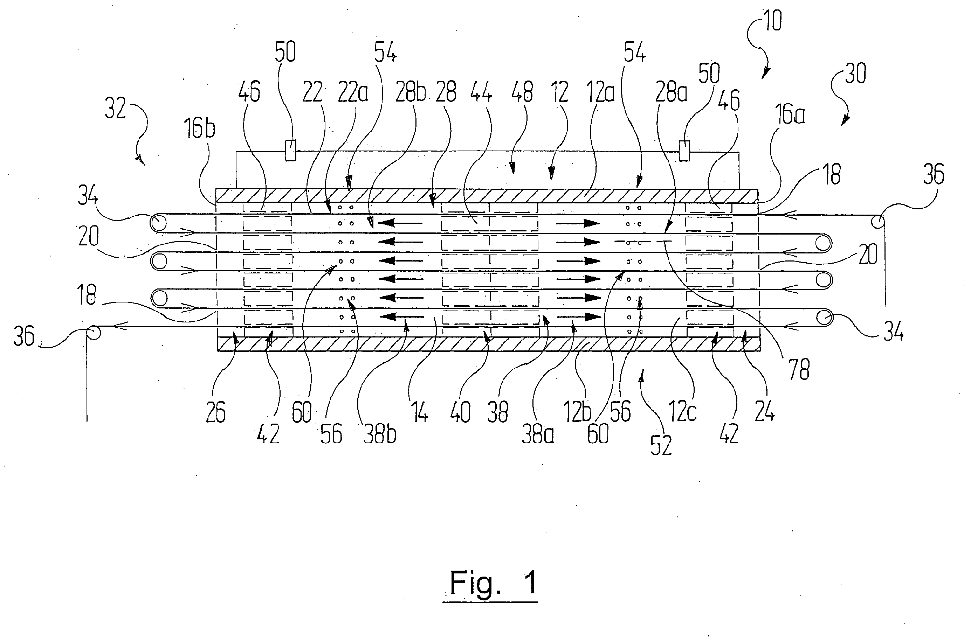

Zunächst wird auf die Figur 1 Bezug genommen, die einen vertikalen Schnitt eines Oxidationsofens zeigt, der zur Herstellung von Kohlenstofffasern eingesetzt wird und insgesamt mit 10 bezeichnet ist.

Der Oxidationsofen 10 umfasst ein Gehäuse 12, das einen den Innenraum 14 Oxidationsofens 10 bildenden Durchlaufraum durch eine Deckenwand 12a und eine Bodenwand 12b und zwei vertikale Längswände begrenzt, von denen in Figur 1 nur eine hinter der Schnittebene liegende Längswand 12c zu sehen ist. An seinen Stirnenden weist das Gehäuse 12 jeweils eine Stirnwand 16a, 16b auf, wobei in der Stirnwand 16a von oben nach unten abwechselnd horizontale Eingangschlitze 18 und Ausgangsschlitze 20 und in der Stirnwand 16b von oben nach unten abwechselnd horizontale Ausgangsschlitze 20 und Eingangschlitze 18 vorhanden sind, die der Übersichtlichkeit halber nicht alle ein Bezugszeichen tragen. Durch die Eingangs- und Ausgangsschlitze 18 bzw. 20 werden Fasern 22 in den Innenraum 14 hinein und wieder aus diesem herausgeführt. Die Eingangs- und Ausgangsschlitze 18, 20 bilden allgemein Durchtrittsbereiche des Gehäuses 12 für die Kohlenstofffasern 22. Abgesehen von diesen Durchtrittsbereichen ist das Gehäuse 12 des Oxidationsofens 10 gasdicht.

Der Innenraum 14 ist seinerseits in Längsrichtung in drei Bereiche unterteilt und umfasst eine ersten Vorkammer 24, welche unmittelbar neben der Stirnwand 16a angeordnet ist, eine zweite Vorkammer 26, welcher unmittelbar neben der gegenüberliegenden Stirnwand 16b benachbart ist, sowie einen zwischen den Vorkammern 24, 26 angesiedelten Prozessraum 28.

Die Vorkammern 24 und 26 bilden so zugleich eine Ein- und Austrittsschleuse für die Fasern 22 in den Innenraum 14 bzw. den Prozessraum 28.

Die zu behandelnden Fasern 22 werden dem Innenraum 14 des Oxidationsofens 10 parallel verlaufend als Art Faserteppich 22a zugeführt. Hierzu treten die Fasern 22 von einem ersten Umlenkbereich 30, der neben der Stirnwand 16a außerhalb des Ofengehäuses 12 liegt, durch den obersten Eingangsschlitz 18 in der Stirnwand 16a in die ersten Vorkammer 24 ein. Die Fasern 22 werden sodann durch den Prozessraum 28 und durch die zweiten Vorkammer 26 zu einem zweiten Umlenkbereich 32, der neben der Stirnwand 16b außerhalb des Ofengehäuses 12 liegt, und von dort wieder zurückgeführt.

Insgesamt durchlaufen die Fasern 22 den Prozessraum 28 serpentinenartig über von oben nach unten aufeinander folgende Umlenkrollen 34, von denen lediglich zwei ein Bezugzeichen tragen. Beim vorliegenden Ausführungsbeispiel sind in jedem Umlenkbereich 30, 32 jeweils drei mit ihren Achsen parallel übereinander liegende Umlenkrollen 34 vorgesehen. Zwischen den Umlenkrollen 34 spannt der durch die Vielzahl von nebeneinander laufenden Fasern 22 gebildete Faserteppich 22a jeweils eine Ebene auf. Der Verlauf der Fasern kann auch von unten nach oben erfolgen und es können auch mehr oder weniger Ebenen als in Figur 1 gezeigt aufgespannt sein.

Nach dem gesamten Durchlauf durch den Prozessraum 28 verlassen die Fasern 22 den Oxidationsofen 10 durch den untersten Ausgangsschlitz 20 in der Stirnwand 16b. Vor dem Erreichen des obersten Eingangsschlitz 18 in der Stirnwand 16a und nach verlassen des Oxidationsofens durch den untersten Ausgangsschlitz 20 in der Stirnwand 16b werden die Fasern 22 außerhalb des Ofengehäuses 12 über weitere Führungsrollen 36 geführt.

Der Prozessraum 28 wird unter Prozessbedingungen von einer heißen Arbeitsatmosphäre 38 durchströmt, wobei es beim vorliegenden Ausführungsbeispiel zwei gegenläufige heiße Luftströme 38a, 38b mit jeweils einer durch Pfeile veranschaulichten Hauptströmungsrichtung gibt, wodurch der Prozessraum 28 strömungstechnisch in zwei Prozessraumabschnitte 28a, 28b aufgeteilt ist. Hierzu sind im mittleren Bereich des Prozessraumes 28 eine Einblaseinrichtung 40 und in den beiden außen liegenden Endbereichen des Prozessraumes 28 jeweils eine Absaugeinrichtung 42 angeordnet, die jeweils den Vorkammern 24, 26 benachbart sind. Die Einblaseinrichtung 40 umfasst mehrere Einblaskästen 44 und die Absaugeinrichtungen 42 umfassen mehrere Absaugkästen 46, die jeweils zwischen den durch den Faserteppich 22a aufgespannten Ebenen angeordnet sind und sich zwischen den vertikalen Längswänden des Ofengehäuses 12 erstrecken.

Ausgehend beispielsweise von den Absaugeinrichtungen 42 wird die Luft in einen in Figur 1 hinter der Zeichenebene liegenden Luftleitraum 48 gefördert, in dem sie auf hier nicht weiter interessierende Weise aufbereitet und konditioniert wird, wobei insbesondere deren Temperatur durch nicht eigens gezeigte Heizaggregate eingestellt wird.

Von dem Luftleitraum 48 gelangt die Luft jeweils zu der Einblaseinrichtung 40. Diese gibt die nun umgewälzte und konditionierte Luft gegensinnig strömend in Richtung auf die Umlenkbereiche 30 und 32 in die Prozessraumabschnitte 28a, 28b ab. In diesem strömen die Luftströme 38a, 38b gegensinnig zu den Absaugeinrichtungen 42, was in Figur 1 durch entsprechende Pfeile veranschaulicht ist. Ingesamt sind so zwei Umwälz-Luftkreisläufe geschlossen und der Oxidationsofen 10 wird strömungstechnisch nach dem oben erwähnten "center-to-end"-Prinzip betrieben. Aber auch alle anderen bekannten Strömungsprinzipien können umgesetzt sein.

Allgemein ausgedrückt bilden die Einblaseinrichtung 40 und die Absaugeinrichtungen 42 gemeinsam mit dem Luftleitraum 48 und vorhandenen Konditioniereinrichtungen eine Atmosphäreneinrichtung, mit welcher eine heiße Arbeitsatmosphäre 38 erzeugt und in den Prozessraum 28 eingeblasen werden kann, welche den Prozessraum 28 unter Prozessbedingungen durchströmt.

Während des serpentinenartigen Durchgangs der Fasern 22 durch den Prozessraum 28 werden diese so von heißer, sauerstoffhaltiger Luft umspült und dabei oxidiert. Die genaue Ausbildung sowohl der Einblaseinrichtung 40 als auch der Absaugeinrichtungen 42 sind vorliegend nicht weiter von Belang.

Im Bereich des Luftleitraumes 48 sind außerdem zwei Auslässe 50 vorgesehen. Über diese können diejenigen Gas- bzw. Luftvolumina abgeführt werden, die entweder bei dem Oxidationsprozess entstehen oder als Frischluft durch eine nicht eigens gezeigte Zulufteinrichtung in den Prozessraum 28 gelangen, um so den Lufthaushalt im Oxidationsofen 10 aufrecht zu erhalten. Die abgeführten Gase, die auch giftige Bestandteile enthalten können, werden einer thermischen Nachverbrennung zugeführt. Die dabei mögliche zurückgewonnene Wärme kann zumindest zur Vorerwärmung der dem Oxidationsofen 10 zugeführten Frischluft verwendet werden.

Der Oxidationsofen 10 umfasst ein Strömungsmesssystem 52, mit dem ein Strömungsprofil der Arbeitsatmosphäre 38 im Prozessraum 28 unter Prozessbedingungen erstellt werden kann. Das Strömungsmesssystem 52 umfasst hierfür wenigstens eine Sensoranordnung 54 mit mehreren Sensoreinrichtungen 56 zur Ermittlung der Strömungsgeschwindigkeit, die sich im Prozessraums 28 befinden und unter Prozessbedingungen verwendbar sind.

Beim vorliegenden Ausführungsbeispiel ist in jedem Prozessraumabschnitt 28a, 28b des Prozessraums 28 eine solche Sensoranordnung 54 vorgesehen und das Strömungsmesssystem 52 kann das Strömungsprofil der Arbeitsatmosphäre 38, welche die Prozessraumabschnitte 28a, 28b mit unterschiedlichen Hauptströmungsrichtungen durchströmt, jeweils gesondert erstellen.

Nachfolgend wird lediglich die Sensoranordnung 54 im Raumabschnitt 28a des Prozessraumes 28 erläutert; das hierzu Gesagte gilt sinngemäß entsprechend für den Prozessraumabschnitt 28b.

Im jedem Zwischenraum zwischen zwei benachbarten Faserteppichen 22a ist ein Sensorbereich 58 definiert, in denen jeweils eine Sensoreinrichtung 56 angeordnet ist, mittels welcher die Strömungsgeschwindigkeit des Luftstroms 38a in diesem Sensorbereich 58 erfasst werden kann. Die Sensoreinrichtungen 56 sind jeweils als Differenzdruck-Sensoreinrichtung 60 ausgebildet.

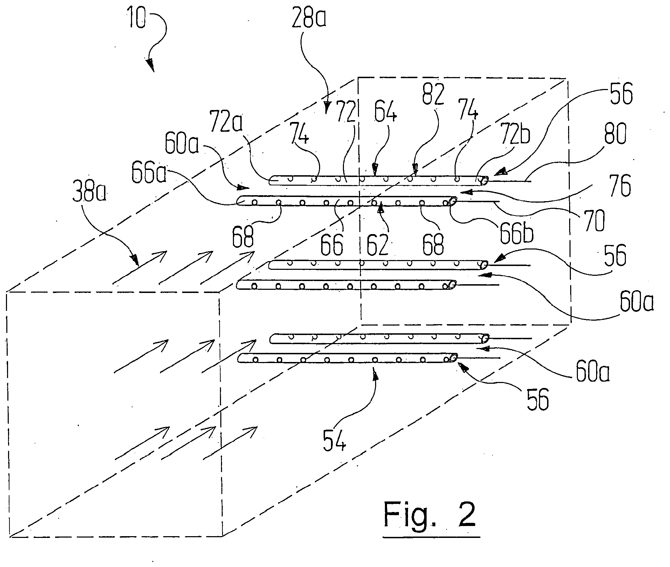

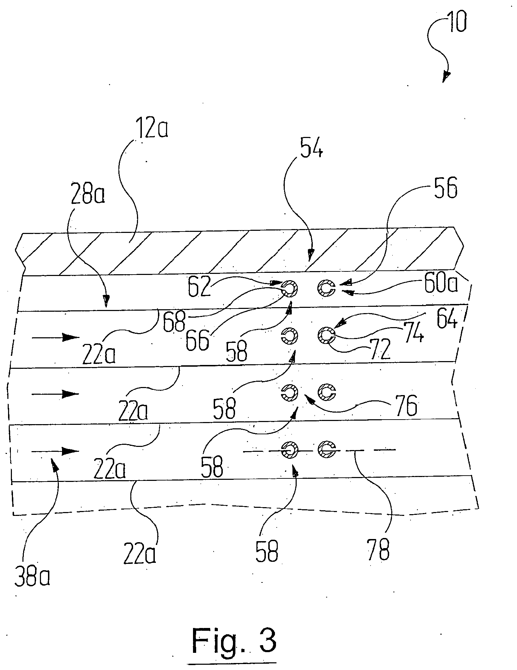

Die Figuren 2 und 3 veranschaulichen Differenzdruck-Sensoreinrichtungen 60a gemäß einem ersten Ausführungsbeispiel der Differenzdruck-Sensoreinrichtungen 60, wobei jeweils ein Teil des Prozessraumabschnitts 28a und in Figur 2 nur die Sensoranordnung 54 des Strömungsmesssystems 52 gezeigt ist. Die Differenzdruck-Sensoreinrichtungen 60a, umfassen jeweils eine Stausonde 62 und eine Sonde 64 für den statischen Druck; es ist nur eine Differenzdruck-Sensoreinrichtung 60a mit weiteren Bezugszeichen versehen.

Die Stausonde 62 hat als Staurohr 66 ein langgestrecktes hohles Rohr, dass sich im Sensorbereich 58 quer zur Hauptströmungsrichtung des zu vermessenden Luftstroms 38a zwischen zwei Faserteppichen 22a erstreckt.

Das Staurohr 66 weist in Längsrichtung in regelmäßigen Abständen Öffnungen 68 auf, die auf einer geraden Linie angeordnet sind. Das Staurohr 66 ist so ausgerichtet, dass diese Öffnungen 68 in Richtung entgegen der Hauptströmungsrichtung des Luftstroms 38a weisen. Das Staurohr 66 ist an einem Ende 66a geschlossen. Der am gegenüberliegenden Messende 66b des Staurohres 66 anliegende Staudruck P₁ wird mit Hilfe einer Druckmesseinheit 70 ermittelt, die lediglich schematisch als Messfühler angedeutet ist. Der am Messende 66a des Staurohres 66 herrschende Druck ist aus an und für sich bekannten physikalischen Gründen der Mittelwert der Drücke über die Längserstreckung des Staurohres 66.

Die Sonde 64 für den statischen Druck umfasst ihrerseits als Referenzrohr 72 ein langgestrecktes hohles Druckrohr, welches baugleich zum Staurohr 66 ist und entsprechend angeordnete Öffnungen 74 aufweist. Das Referenzrohr 72 verläuft zwischen zwei Faserteppichen 22a unter Einhaltung eines vorgegebenen Messabstandes 76 parallel zum Rohr 66 der Stausonde 62 und somit ebenfalls horizontal und quer zur Hauptströmungsrichtung des zu vermessenden Luftstroms 38a. Das Referenzrohr 72 ist in Hauptströmungsrichtung des Luftstroms 38a hinter dem Staurohr 66 angeordnet und so ausgerichtet, dass dessen Öffnungen 74 von dem Staurohr 66 weg weisen.

Die beiden Rohre 66 und 72 definieren gemeinsam eine Messebene 78, welche parallel zur Hauptströmungsrichtung des Luftstroms 38a verläuft und lediglich in den Figuren 1, 3 und 5 angedeutet ist. Beim vorliegenden Ausführungsbeispiel verläuft die Messebene 78 folglich horizontal.

Das Referenzrohr 72 ist an einem Ende 72a geschlossen. Der am gegenüberliegenden Messende 72b des Referenzrohres 72 anliegende statische Referenzdruck P₂ wird mittels einer Druckmesseinheit 76 erfasst, die hier ebenfalls lediglich schematisch als Messfühler veranschaulicht ist. Auch der am Messende 72b des Referenzrohres 72 herrschende Druck spiegelt den Mittelwert der Drücke über die Längserstreckung des Referenzrohres 72 wider.

Aus der Differenz zwischen dem Staudruck P₁ und dem statischen Druck P₂ kann mit Hilfe von bekannten Berechnungsalgorithmen die bezogen auf eine Messstrecke 82 im Prozessraumabschnitt 28a mittlere Strömungsgeschwindigkeit des Luftstroms 38a berechnet werden. Die Messstrecke 82 hängt von der Länge des Stau- und des Referenzrohres 66, 72 ab und entspricht beim vorliegenden Ausführungsbeispiel der Breite des Prozessraumabschnittes 28a.

In vertikaler Richtung können auf diese Weise die Strömungsgeschwindigkeiten der Arbeitsatmosphäre 38 in den jeweiligen Sensorbereichen 58 zwischen den Faserteppichen 22a erfasst und zu einem Gesamtströmungsprofil kombiniert werden.

Gemäß Figur 1 befindet sich zwischen allen Ebenen der Faserteppiche 22a ein Sensorbereich 58 mit einer Differenzdruck-Sensoreinrichtung 60. Deren Anzahl kann jedoch auch geringer sein und es kann beispielsweise nur, in vertikaler Richtung betrachtet, in jedem zweiten oder dritten Zwischenraum zwischen zwei benachbarten Faserteppichen 22a ein Sensorbereich 58 definiert sein.

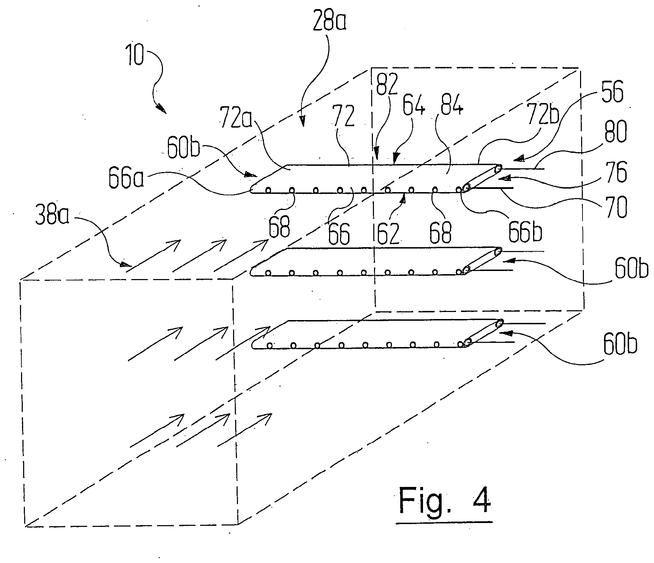

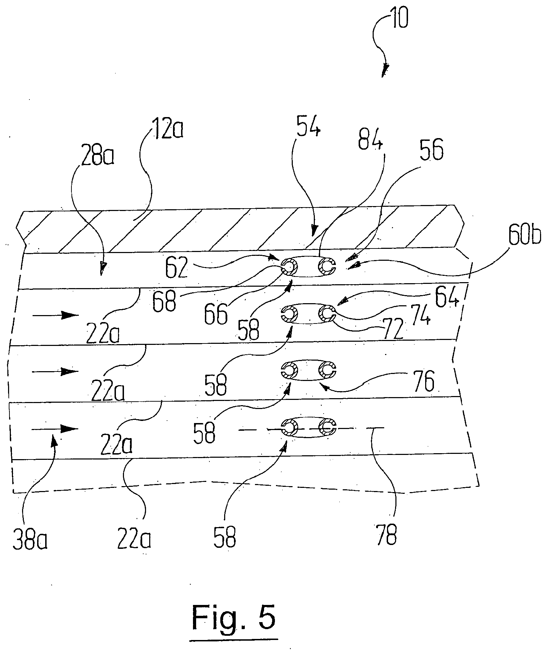

Die Figuren 4 und 5 veranschaulichen Differenzdruck-Sensoreinrichtungen 60b als zweites Ausführungsbeispiel der Differenzdruck-Sensoreinrichtungen 60. Im Unterschied zu einer Differenzdruck-Sensoreinrichtung 60a umfasst eine Differenzdruck-Sensoreinrichtung 60b eine Einhausung 84, welche das jeweilige Staurohr 66 der Stausonde 62 und Referenzrohr 72 der Sonde 64 für den statischen Druck abgesehen von den Öffnungen 68 bzw. 74 einhüllt, so dass der Zwischenraum zwischen dem Stau- und dem Referenzrohr 66, 72 nicht von dem Luftstrom 38a erreicht wird. Hierdurch wird die Strömung an der Differenzdruck-Sensoreinrichtung 60b vergleichmäßigt und Turbulenzen verringert. Dies trägt zu einem homogeneren Heizverhalten des Oxidationsofens 10 bei.

Wie in Figur 5 zu erkennen ist, hat die Differenzdruck-Sensoreinrichtung 60b durch die Einhausung 84 eine im Querschnitt ovalförmige Außenkontur.

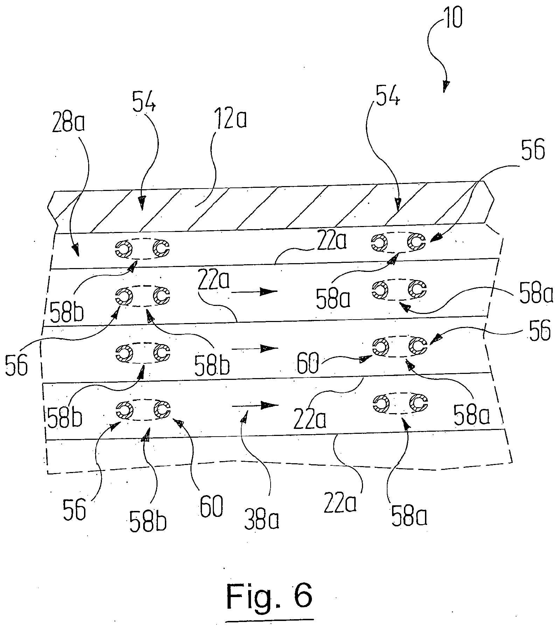

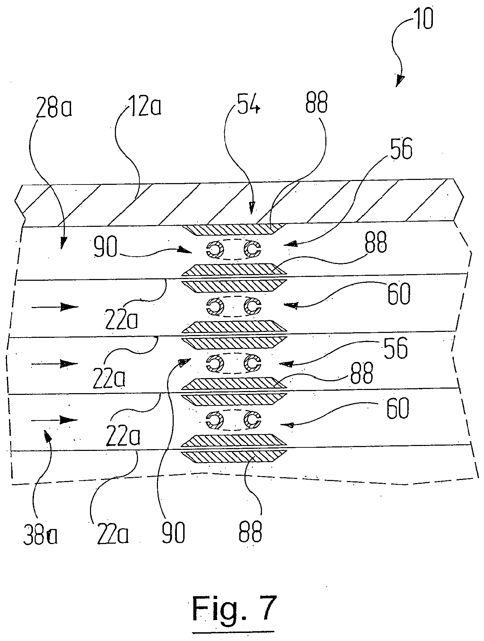

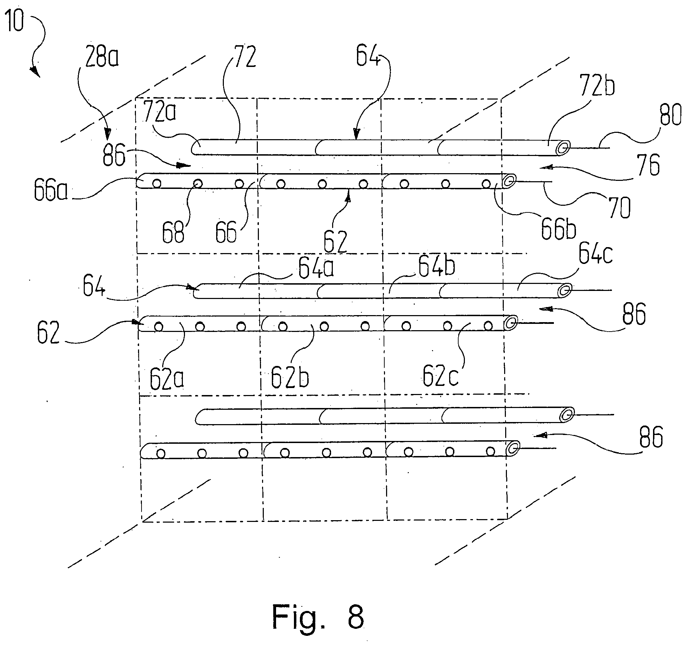

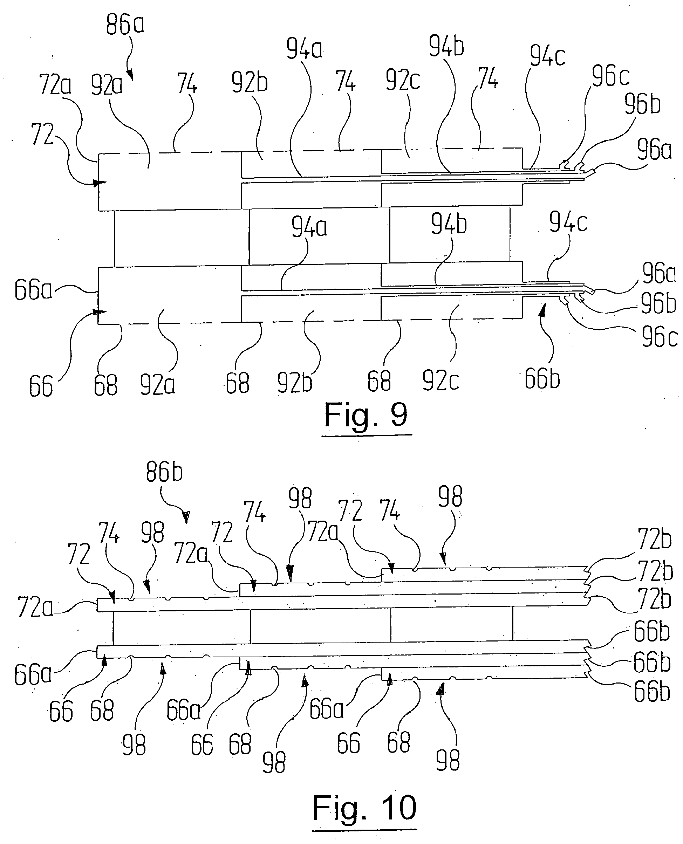

Figur 6 zeigt eine Abwandlung, bei welcher in jedem Zwischenraum zwischen zwei benachbarten Faserteppichen 22a zwei benachbarte Sensorzonen 58a, 58b des Sensorbereichs 58 definiert sind, in denen jeweils eine Sensoreinrichtung 56 angeordnet ist. Hierbei kann es sich um die Differenzdruck-Sensoreinrichtungen 60a oder 60b, aber auch um das weiter unten zu Figur 8 erläuterte alternative Ausführungsbeispiel einer Differenzdruck-Sensoreinrichtung 86 mit den in den Figuren 9 bis 12 veranschaulichten Varianten handeln. Dies ist in Figur 6 und in Figur 7 auch dadurch angedeutet, dass die Einhausung dort nur gestrichelt angedeutet ist.

Allgemein können zwischen zwei benachbarten Faserteppichen 22a in der Hauptströmungsrichtung des Luftstroms 38a auch mehr als zwei Sensoreinrichtungen 56 angeordnet sein. Je mehr Sensoreinrichtungen 56 vorhanden sind, desto feiner aufgelöst kann das Strömungsprofil in Hauptströmungsrichtung des Luftstroms 38a erstellt werden.

In Figur 7 ist eine Abwandlung gezeigt, bei der in dem Sensorbereich 58 zwischen zwei benachbarten Faserteppichen 22a Luftleitelemente 88 vorhanden sind, durch welche der Luftstrom 38a in Richtung auf die Sensoreinrichtung 56 gebündelt wird.

Die Luftleitelemente 88 geben einen Einströmweg 90 vor, der sich in Richtung auf die Sensoreinrichtung 56 verjüngt und im Querschnitt trichterförmig ist. Hierdurch werden ebenfalls Turbulenzen am jeweiligen Staurohr 66 und hinter dem Referenzrohr 72 verringert.

Mit Hilfe der oben erläuterten Sensoranordnung 56 mit den Differenzdruck-Sensoreinrichtungen 60a oder 60b kann ein Vertikal-Strömungsprofil der Arbeitsatmosphäre 38 bzw. der Luftströme 38a und 38b in den Prozessraumabschnitten 28a und 28b erstellt werden. In horizontaler Richtung ist dort keine Unterscheidung zwischen unterschiedlichen Strömungsgeschwindigkeiten der Luftströme 38a, 38b möglich.

Figur 8 zeigt als weitere Abwandlung der Sensoreinrichtungen 56 mehrere Differenzdruck-Sensoreinrichtungen 86, mit denen unterschiedliche Strömungsgeschwindigkeiten der Arbeitsatmosphäre 38 im Sensorbereich 58 auch quer zur Hauptströmungsrichtung erfasst werden können, so dass auch in dieser Richtung ein Strömungsprofil erstellt werden kann. Insgesamt kann so ein Strömungsrasterprofil über den Querschnitt des Oxidationsofens 10 über die Sensorbereiche 58 hinweg erstellt werden.

Die Stausonde 62 umfasst dort drei Messabschnitte 62a, 62b, 62c, welche mit drei Messabschnitten 64a, 64b, 64b der Sonde 64 für den statischen Druck zusammenarbeiten; vier Ausführungsbeispiele einer solchen Differenzdruck-Sensoreinrichtung 86 sind in den Figuren 9 bis 11 veranschaulicht und mit 86a, 86b, 86c bzw. 86d bezeichnet. Nachfolgend wird jeweils das jeweilige Staurohr 66 der jeweils vorhandenen Stausonde 62 erläutert. Das Referenzrohr 72 der jeweiligen Sonde 64 für den statischen Druck ist jeweils baugleich ausgeführt. Zu Anordnung, Positionierung und Ausrichtung der Staurohre 66 bzw. Referenzrohre 72 der Differenzdruck-Sensoreinrichtungen 86 im Prozessraum 28 des Oxidationsofens 10 gilt im Übrigen das zu den Differenzdruck-Sensoreinrichtungen 60 Gesagte sinngemäß entsprechend.

Bei der Differenzdruck-Sensoreinrichtung 86a gemäß Figur 9 ist das Staurohr 66 vom geschlossenen Ende 66a zum Messende 66b in mehrere Messkammern 92 unterteilt, wobei beim vorliegenden Ausführungsbeispiel drei Messkammern 92a, 92b, 92c vorgesehen sind. Diese münden jeweils an ihrer vom geschlossenen Ende 66a abliegenden Stirnseite über eine Hohlleitung 94a, 94b, 94c in Messanschlüsse 96 in Form von hier drei Messanschlüssen 96a, 96b, 96c am Messende 66b des Staurohres 66, an die jeweils eine Druckmesseinheit 70 angeschlossen werden kann.

Die Hohlleitungen 94a, 94b, 94c sind koaxial zueinander und zu den Messkammern 92a, 92b, 92c angeordnet, so dass die Hohlleitung 94a der ersten Messkammer 92a durch die zweite Messkammer 92b und durch die dritte Messkammer 92c verläuft und die Hohlleitung 94b der zweiten Messkammer 92b sich durch die dritte Messkammer 92c hindurch erstreckt und dort von der Hohlleitung 94a der ersten Messkammer 92a umgeben ist. Die Hohlleitung 94c der dritten Messkammer 92c umgibt schließlich die ineinander verlaufenden Hohlleitungen 94a und 94b.

Entlang jeder Messkammer 92a, 92b, 92c sind mehrere Öffnungen 68 vorhanden. Der gemessene Druck an jedem Messanschluss 96a, 96b, 96c ist der mittlere Druck der Arbeitsatmosphäre 38 über die Erstreckung der jeweiligen Messkammer 92a, 92b bzw. 92c. Zwei in Hauptströmungsrichtung der Arbeitsatmosphäre 38 hintereinander angeordnete Messkammer 92 des Staurohres 66 und des Referenzrohres 72 bilden ein Messkammerpaar; deren am jeweiligen Messanschluss 96 gemessenen Drücke werden entsprechend korreliert.

Auf diese Weise kann folglich ein Strömungsprofil der Arbeitsatmosphäre 38 auch quer zur Hauptströmungsrichtung erfasst werden. Je mehr Messkammern 92 vorhanden sind, desto feiner löst das Strömungsprofil die Strömungsverhältnisse im Sensorbereich 58 in Richtung quer zur Hauptströmungsrichtung auf.

In den Figuren 10 bis 12 sind Staurohre 66 und Referenzrohre 72 in anderem Maßstab bzw. mit anderem Querschnitt gezeigt.

Figur 10 zeigt eine Differenzdruck-Sensoreinrichtung 86b, bei der mehrere geradlinige Staurohre 66 vorhanden sind, die unterschiedlich lang und aneinanderliegend derart in der Messebene 78 angeordnet sind, dass jeweils ein Messabschnitt 98 am geschlossenen Ende 66b des jeweiligen Staurohrs 66 mit Öffnungen 68 im Prozessraum 28 liegt.

In gleicher Weise sind mehrere Referenzrohre 72 unterschiedlicher Länge mit solchen Messabschnitten 98 vorhanden. Zwei in Hauptströmungsrichtung der Arbeitsatmosphäre 38 hintereinander angeordnete Messabschnitte 98 eines Staurohres 66 und eines Referenzrohres 72 bilden ein Messabschnittpaar; deren am jeweiligen Messende 66a bzw. 72a gemessenen Drücke werden entsprechend korreliert.

An den Übergangsstellen von einem Staurohr 66 zum nächsten ist das geschlossene Ende 66a eines Staurohres 66 jeweils eine Stufe ausgebildet, was in Figur 10 gut zu erkennen ist.

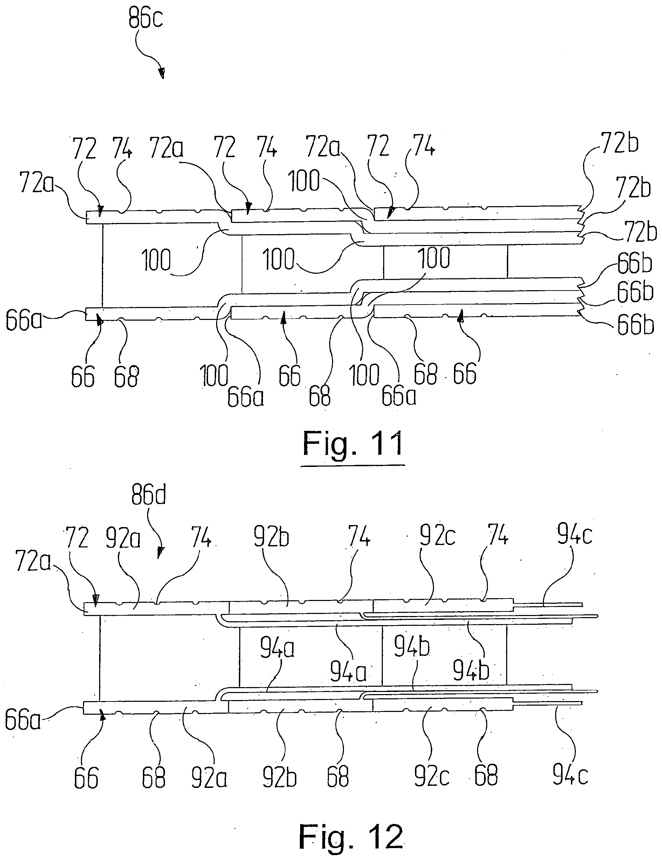

Beim Ausführungsbeispiel der Differenzdruck-Sensoreinrichtung 86c gemäß Figur 11 sind statt geradliniger Staurohre 66 und Referenzrohre 72 wieder unterschiedlich lange, jedoch stufig verlaufende Rohre mit Stufen 100 und Stufenabschnitten 102 vorhanden, bei denen jeweils am geschlossenen Ende 66a bzw. 72a ein Messabschnitt 98 ausgebildet ist.

Wie aus Figur 11 ersichtlich ist, können die Rohre 66 bzw. 72 auf Grund der gestuften Ausbildung derart aneinander anliegend angeordnet werden, dass dem Luftstrom 38a weitgehend eine einheitliche Auftrefffläche geboten ist, die durch die einzelnen Messabschnitte 98 der verschiedenen Rohre 66 bzw. 72 vorgegeben ist.

In Figur 12 ist als weitere Abwandlung eine Differenzdruck-Sensoreinrichtung 86d mit Messkammern 92 und Hohlleitungen 94 gezeigt. Dort gehen die Hohlleitungen 94 nicht stirnseitig von den Messkammern 92 ab und liegen nicht koaxial zueinander. Vielmehr verlaufen die Hohlleitungen 94 parallel zum Staurohr 66 bzw. zum Referenzrohr 72 und münden seitlich in die jeweilige Messkammer 92.

Wenn jedes Messende 66b, 72b jedes Staurohres 66 und jedes Referenzrohres 72 der Differenzdruck-Sensoreinrichtungen 60 oder 86 mit einer eigenen Druckmesseinheit 70 bzw. 80 verbunden ist, kann die Arbeitsatmosphäre 38 während des Oxidationsbetriebs des Oxidationsofens 10 in Echtzeit überwacht werden.

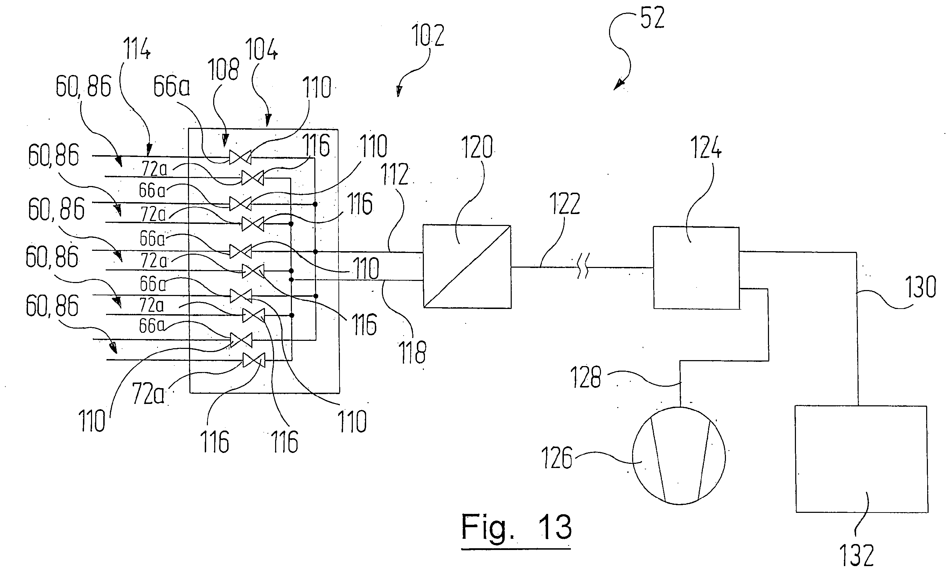

Allerdings sind der bauliche Aufwand und die Anzahl der erforderlichen Druckmesseinheiten 70, 80 entsprechend hoch. Figur 13 zeigt ein Strömungsmesssystem 52, bei welchem eine Gruppenmesseinheit 102 über eine Ventileinrichtung 104 mit mehreren Differenzdruck-Sensoreinrichtungen 60 bzw. 86 verbunden ist, die durch die Gruppenmesseinheit 102 sequenziell ausgewertet werden können. Auf diese Weise kann periodisch ein Strömungsprofil der Arbeitsatmosphäre 38 im Oxidationsofen 10 erstellt werden. Dies reicht in der Regel aus, um Änderungen im Strömungsbild rasch zu erkennen und zeitnah die Einblaseinrichtung 40 und die Absaugeinrichtungen 42 entsprechend einzustellen, bis das gewünschte Strömungsprofil aufgebaut ist.

Die Ventileinrichtung 104 verbindet die Messenden 66b der Staurohre 66 einer Staurohrgruppe 108 über Ventile 110 mit einer Staudruckleitung 112 und die Messenden 72b der Referenzrohre 72 einer Referenzrohrgruppe 114 über Ventile 116 mit einer Referenzdruckleitung 118.

Die Staudruckleitung 112 und die Referenzdruckleitung 118 führen zu einem Wandler 120, der den erfassten Druck in ein elektrisches Signal umwandelt und über eine Signalleitung 122 zu einer Steuerung 124 übermittelt. Die Steuerung 124 berechnet das Strömungsprofil der Arbeitsatmosphäre 38 im Oxidationsofen 10 und vergleicht das gemessene Ist-Strömungsprofil mit einem gespeicherten Soll-Strömungsprofil. Bei Abweichungen von dem Soll-Strömungsprofil steuert die Steuerung 124 die Luftzufuhr des Oxidationsofens 10, was exemplarisch durch ein Gebläse 126 veranschaulicht ist, das über eine Steuerleitung 128 mit der Steuerung verbunden ist. Auf diese Weise ist ein Regelkreis ausgebildet, durch welchen unmittelbar auf erkannte Abweichungen von einem Soll-Strömungsprofil reagiert und die Strömung der Arbeitsatmosphäre 38 eingestellt werden kann.

Außerdem ist die Steuerung 124 über eine Datenleitung 130 mit einer Anzeige 132 verbunden, auf welcher die Überwachung der Arbeitsatmosphäre 38 in dem Oxidationsofen 10 visualisiert werden kann. Hierzu können beispielsweise ein gemessenes Strömungsprofil und ein vorgegebenes Soll-Strömungsprofil grafisch wiedergegeben und so von einer Bedienperson verglichen werden.

Es werden nun jeweils die Ventile 110 und 116 eines Staurohr/Referenzrohr-Paares einer Differenzdruck-Sensoreinrichtung 60 oder 86 nacheinander geöffnet; die anderen Ventile 110, 116 sind jeweils geschlossen. Dann können die Drücke an den Messenden 66b, 72b des zugehörigen Staurohrs 66 bzw. Referenzrohres 72 erfasst werden.

Bei einer nicht eigens gezeigten Abwandlung können die Steuersignale auch zur automatischen Verstellung von Zu- oder Abluftöffnungen innerhalb oder außerhalb des Prozessraumes genutzt werden. Abhängig von dem ermittelten Strömungsprofil können die Zu- und Abluftöffnungen, beispielsweise durch Stellklappen, lokal verengt oder erweitert werden, so dass ein homogenes Strömungsbild über den Ofenquerschnitt aufrechterhalten wird.

## Patentansprüche

1. Oxidationsofen zur oxidativen Behandlung von Fasern, insbesondere zur Herstellung von Kohlenstofffasern, mit
a) einem Gehäuse (12), welches abgesehen von Durchtrittsbereichen (18, 20) für die Fasern (22) gasdicht ist;
b) einem im Innenraum (14) des Gehäuses (12) befindlichen Prozessraum (28);
c) einer Atmosphäreneinrichtung (40, 42, 48), mit welcher eine heiße Arbeitsatmosphäre (38) erzeugbar und in den Prozessraum (28) einblasbar ist, die den Prozessraum (28) unter Prozessbedingungen in einer Hauptströmungsrichtung durchströmt;
d) Umlenkrollen (34), welche die Fasern (22) als Faserteppich (22a) nebeneinander liegend serpentinenartig durch den Prozessraum (28) führen, wobei der Faserteppich (22a) zwischen gegenüber liegenden Umlenkrollen (34) jeweils eine Ebene aufspannt,
**dadurch gekennzeichnet, dass**
e) ein Strömungsmesssystem (52) vorhanden ist, mittels welchem unter Prozessbedingungen ein Strömungsprofil der Arbeitsatmosphäre (38) erstellbar ist und welches wenigstens eine Sensoreinrichtung (56) zur Ermittlung der Strömungsgeschwindigkeit umfasst, welche in einem Sensorbereich (58) zwischen zwei benachbarten Faserteppichen (22a) angeordnet ist.

2. Oxidationsofen nach Anspruch 1, **dadurch gekennzeichnet, dass** die Sensoreinrichtung (56) derart eingerichtet ist, dass unterschiedliche Strömungsgeschwindigkeiten der Arbeitsatmosphäre (38) im Sensorbereich (58) quer zur Hauptströmungsrichtung erfassbar sind.

3. Oxidationsofen nach Anspruch 1 oder 2, **dadurch gekennzeichnet, dass** die wenigstens eine Sensoreinrichtung (56) als Differenzdruck-Sensoreinrichtung (60, 86) ausgebildet ist.

4. Oxidationsofen nach Anspruch 3, **dadurch gekennzeichnet, dass** die wenigstens eine Differenzdruck-Sensoreinrichtung (60) eine Stausonde (62) und eine Sonde (64) für den statischen Druck umfasst.

5. Oxidationsofen nach Anspruch 4, **dadurch gekennzeichnet, dass**
a) die Stausonde (62) wenigstens ein Staurohr (66) mit einem geschlossenen Ende (66a) und einem Messende (66b) umfasst und die Sonde (64) für den statischen Druck wenigstens ein Referenzrohr (72) mit einem geschlossenen Ende (72a) und einem Messende (72b) umfasst, wobei an den Messenden (66a, 72b) ein Staudruck (P₁) und ein statischer Referenzdruck (P₂) erfassbar sind;
b) sich das Staurohr (66) und das Referenzrohr (72) im Sensorbereich (58) quer zur Hauptströmungsrichtung der Arbeitsatmosphäre (38) und in einem Messabstand (76) parallel zueinander erstrecken;
c) das Staurohr (66) Öffnungen (68) aufweist und so angeordnet ist, dass die Öffnungen (68) in Richtung entgegen der Hauptströmungsrichtung der Arbeitsatmosphäre (38) weisen;
d) das Referenzrohr (72) Öffnungen (74) aufweist und so in Hauptströmungsrichtung der Arbeitsatmosphäre (38) hinter dem Staurohr (66) angeordnet ist, dass die Öffnungen (74) von dem Staurohr (66) weg weisen.

6. Oxidationsofen nach Anspruch 5, **dadurch gekennzeichnet, dass** die Differenzdruck-Sensoreinrichtung (60b) eine Einhausung (84) umfasst, welche das Staurohr (66) und das Referenzrohr (72) abgesehen von deren Öffnungen (68, 74) einhüllt.

7. Oxidationsofen nach Anspruch 5 oder 6, **dadurch gekennzeichnet, dass** die Stausonde (62) mehrere Messabschnitte (62a, 62b, 62c) und die Sonde (64) für den statischen Druck mehrere Messabschnitte (64a, 64b, 64b) umfasst.

8. Oxidationsofen nach Anspruch 7, **dadurch gekennzeichnet, dass** die Messabschnitte (62a, 62b, 62c; 64a, 64b, 64c) durch Messkammern (92) ausgebildet sind, die jeweils an ihrer vom geschlossenen Ende (66a, 72a) abliegenden Stirnseite über eine Hohlleitung (94) in Messanschlüsse (96) am Messende (66b) münden.

9. Oxidationsofen nach Anspruch 8, **dadurch gekennzeichnet, dass** die Hohlleitungen (94) koaxial zueinander und zu den Messkammern (92a, 92b, 92c) verlaufen.

10. Oxidationsofen nach Anspruch 7, **dadurch gekennzeichnet, dass** die Messabschnitte (62a, 62b, 62c; 64a, 64b, 64c) dadurch ausgebildet sind, dass mehrere Staurohre (66) oder Referenzrohre (72) vorhanden sind, die unterschiedlich lang und aneinanderliegend derart angeordnet sind, dass jeweils ein Messabschnitt (98) am geschlossenen Ende (66b, 72b)) des jeweiligen Staurohrs (66) oder Referenzrohrs (72) mit Öffnungen (68, 74) im Prozessraum (28) liegt.

11. Oxidationsofen nach Anspruch 10, **dadurch gekennzeichnet, dass** die mehreren Staurohre (66) oder Referenzrohre (72) geradlinig oder gewinkelt sind.

12. Oxidationsofen nach einem der Ansprüche 1 bis 11,
**dadurch gekennzeichnet, dass** wenigstens eine Sensoranordnung (54) mit mehrere Sensoreinrichtungen (56) vorhanden ist, die in mehreren Sensorbereichen (58) zwischen verschiedenen benachbarten Faserteppichen (22a) angeordnet sind.

13. Oxidationsofen nach einem der Ansprüche 1 bis 12,
**dadurch gekennzeichnet, dass** wenigsten eine Sensoranordnung (54) mit mehreren Sensoreinrichtungen (56) vorhanden ist, die in benachbarten Sensorzonen (58a, 58b) eines Sensorbereichs (58) angeordnet sind.

14. Oxidationsofen nach Anspruch 12 oder 13, **dadurch gekennzeichnet, dass** mehrere Sensoreinrichtungen (56) über eine Ventileinrichtung (104) mit einer Gruppenmesseinheit (102) verbunden und sequenziell auswertbar sind.

15. Oxidationsofen nach einem der Ansprüche 1 bis 14,
**dadurch gekennzeichnet, dass** der Prozessraum (28) mehrere Prozessraumabschnitte (28a, 28b) aufweist, in welchen die Arbeitsatmosphäre (38) mit unterschiedlichen Hauptströmungsrichtungen strömt, wobei deren Strömungsprofil durch das Strömungsmesssystem (52) jeweils gesondert erstellbar ist.

16. Oxidationsofen nach einem der Ansprüche 1 bis 15,
**dadurch gekennzeichnet, dass** in einem Sensorbereich (58) zwischen zwei benachbarten Faserteppichen (22a) Luftleitelemente (88) vorhanden sind, durch welche die Arbeitsatmosphäre (38) in Richtung auf die Sensoreinrichtung (56) gebündelt wird.

## Claims

1. An oxidation furnace for the oxidative treatment of fibers, in particular for the production of carbon fibers, the oxidation furnace having
a) a housing (12) which is gas tight, except for passage regions (18, 20) for the fibers (22);
b) a process chamber (28) which is located in the interior (14) of the housing (12);
c) an atmosphere installation (40, 42, 48), by means of which a hot operating atmosphere (38) can be generated and can be blown into the process chamber (28), wherein the hot operating atmosphere (38) perfuses the process chamber (28) under process conditions in a main flow direction;
d) deflection rollers (34) which guide the fibers (22) lying beside one another as a fiber carpet (22a) in a serpentine manner through the process chamber (28), wherein the fiber carpet (22a) respectively defines a plane between opposing deflection rollers (34),
**characterized in that**
e) a flow measurement system (52) is present, by means of which a flow profile of the operating atmosphere (38) can be established under process conditions and which comprises at least one sensor installation (56) for determining the flow velocity, which is arranged in a sensor region (58) between two adjacent fiber carpets (22a).

2. The oxidation furnace according to claim 1, **characterized in that** the sensor installation (56) is configured such that different flow velocities of the operating atmosphere (38) in the sensor region (58) transverse to the main flow direction are detectable.

3. The oxidation furnace according to claim 1 or 2, **characterized in that** the at least one sensor installation (56) is configured as a differential pressure sensor installation (60, 86).

4. The oxidation furnace according to claim 3, **characterized in that** the at least one differential pressure sensor installation (60) comprises a pitot probe (62) and a probe (64) for the static pressure.

5. The oxidation furnace according to claim 4, **characterized in that**
a) the pitot probe (62) comprises at least one pitot tube (66) having a closed end (66a) and a measurement end (66b) and the probe (64) for the static pressure comprises at least one reference tube (72) having a closed end (72a) and a measurement end (72b), wherein a dynamic pressure (P₁) and a static reference pressure (P₂) are detectable at the measurement ends (66a, 72b);
b) the pitot tube (66) and the reference tube (72) in the sensor region (58) extend transverse to the main flow direction of the operating atmosphere (38) and parallel to each other at a measurement spacing (76);
c) the pitot tube (66) has openings (68) and is arranged such that the openings (68) face in a direction that is opposite to the main flow direction of the operating atmosphere (38);
d) the reference tube (72) has openings (74) and is arranged in the main flow direction of the operating atmosphere (38) behind the pitot tube (66) such that the openings (74) face away from the pitot tube (66).

6. The oxidation furnace according to claim 5, **characterized in that** the differential pressure sensor installation (60b) comprises an enclosure (84) which envelopes the pitot tube (66) and the reference tube (72), except for their openings (68, 74) .

7. The oxidation furnace according to claim 5 or 6, **characterized in that** the pitot probe (62) comprises a plurality of measurement sections (62a, 62b, 62c) and the probe (64) for the static pressure comprises a plurality of measurement sections (64a, 64b, 64b).

8. The oxidation furnace according to claim 7, **characterized in that** the measurement sections (62a, 62b, 62c; 64a, 64b, 64c) are formed by measurement chambers (92) which each open into measurement connectors (96) at the measurement end (66b) at their end side that is remote from the closed end (66a, 72a) via a hollow line (94).

9. The oxidation furnace according to claim 8, **characterized in that** the hollow lines (94) run coaxially to each other and to the measurement chambers (92a, 92b, 92c).

10. The oxidation furnace according to claim 7, **characterized in that** the measurement sections (62a, 62b, 62c; 64a, 64b, 64c) are configured **in that** a plurality of pitot tubes (66) or reference tubes (72) are present which vary in length and are arranged against one another such that in each case one measurement section (98) lies at the closed end (66b, 72b) of the respective pitot tube (66) or reference tube (72) having openings (68, 74) in the process chamber (28).

11. The oxidation furnace according to claim 10, **characterized in that** the plurality of pitot tubes (66) or reference tubes (72) are rectilinear or angular.

12. The oxidation furnace according to one of claims 1 to 11, **characterized in that** at least one sensor assembly (54) having a plurality of sensor installations (56), which are arranged in a plurality of sensor regions (58) between different adjacent fiber carpets (22a), is present.

13. The oxidation furnace according to one of claims 1 to 12, **characterized in that** at least one sensor assembly (54) having a plurality of sensor installations (56), which are arranged in adjacent sensor zones (58a, 58b) of one sensor region (58), is present.

14. The oxidation furnace according to claim 12 or 13, **characterized in that** a plurality of sensor installations (56) are connected to a group measurement unit (102) by a valve installation (104) and are sequentially evaluatable.

15. The oxidation furnace according to one of claims 1 to 14, **characterized in that** the process chamber (28) has a plurality of process chamber sections (28a, 28b) in which the operating atmosphere (38) flows with different main flow directions, wherein their flow profile can be established separately by the flow measurement system (52) in each case.

16. The oxidation furnace according to one of claims 1 to 15, **characterized in that** air guiding elements (88) are present in a sensor region (58) between two adjacent fiber carpets (22a), wherein the operating atmosphere (38) is bundled by the air guiding elements (88) in the direction toward the sensor installation (56).

## Revendications

1. Four d'oxydation dévolu au traitement de fibres par oxydation, notamment en vue de la production de fibres de carbone, comprenant
a) une enceinte (12) étanche aux gaz, abstraction faite de zones de passage (18, 20) dédiées aux fibres (22) ;
b) une chambre de traitement (28), située dans l'espace interne (14) de ladite enceinte (12) ;
c) un dispositif (40, 42, 48) générateur d'atmosphères par lequel peut être créée, et insufflée dans la chambre de traitement (28), une atmosphère de travail (38) chaude qui parcourt ladite chambre de traitement (28) dans une direction principale de circulation, dans des conditions de traitement ;
d) des rouleaux de renvoi (34) qui guident lesdites fibres (22) en juxtaposition mutuelle et à la manière d'un serpentin, à travers ladite chambre de traitement (28), sous la forme d'un tapis de fibres (22a), lequel tapis de fibres (22a) couvre, à chaque fois, l'étendue d'un plan entre des rouleaux de renvoi (34) en vis-à-vis mutuel,
**caractérisé par**
e) la présence d'un système (52) mesureur de défilement, au moyen duquel un profil de circulation de l'atmosphère de travail (38) peut être instauré dans des conditions de traitement, et qui inclut au moins un dispositif de détection (56) affecté à la spécification de la vitesse de défilement et interposé, dans une zone de détection (58), entre deux tapis de fibres (22a) voisins.

2. Four d'oxydation selon la revendication 1, **caractérisé par le fait que** le dispositif de détection (56) est agencé de façon telle que différentes vitesses de défilement de l'atmosphère de travail (38) puissent être détectées, dans la zone de détection (58), transversalement par rapport à la direction principale de circulation.

3. Four d'oxydation selon la revendication 1 ou 2, **caractérisé par le fait que** le dispositif de détection (56), à présence minimale, est réalisé sous la forme d'un dispositif (60, 86) détecteur de pressions différentielles.

4. Four d'oxydation selon la revendication 3, **caractérisé par le fait que** le dispositif (60) détecteur de pressions différentielles, à présence minimale, inclut une sonde de retenue (62) et une sonde (64) dédiée à la pression statique.

5. Four d'oxydation selon la revendication 4, **caractérisé par le fait que**
a) la sonde de retenue (62) inclut au moins un tube d'accumulation (66) comprenant une extrémité fermée (66a) et une extrémité de mesure (66b), et la sonde (64) dédiée à la pression statique inclut au moins un tube de référence (72) comprenant une extrémité fermée (72a) et une extrémité de mesure (72b), sachant qu'une pression dynamique (P1) et une pression statique de référence (P2) peuvent être détectées au niveau desdites extrémités de mesure (66b, 72b);
b) ledit tube d'accumulation (66) et ledit tube de référence (72) s'étendent, dans la zone de détection (58), transversalement par rapport à la direction principale de circulation de l'atmosphère de travail (38) et parallèlement l'un à l'autre selon un espacement de mesure (76) ;
c) ledit tube d'accumulation (66) comporte des orifices (68), et est disposé de telle sorte que lesdits orifices (68) pointent en sens inverse de ladite direction principale de circulation de l'atmosphère de travail (38) ;
d) ledit tube de référence (72) comporte des orifices (74) et est placé derrière ledit tube d'accumulation (66), dans ladite direction principale de circulation de l'atmosphère de travail (38), de telle manière que lesdits orifices (74) pointent à l'écart dudit tube d'accumulation (66).

6. Four d'oxydation selon la revendication 5, **caractérisé par le fait que** le dispositif (60b) détecteur de pressions différentielles inclut un carter (84) enveloppant le tube d'accumulation (66) et le tube de référence (72), abstraction faite des orifices (68, 74) de ces derniers.

7. Four d'oxydation selon la revendication 5 ou 6, **caractérisé par le fait que** la sonde de retenue (62) et la sonde (64) dédiée à la pression statique comprennent, respectivement, plusieurs segments de mesure (62a, 62b, 62c) et plusieurs segments de mesure (64a, 64b, 64c).

8. Four d'oxydation selon la revendication 7, **caractérisé par le fait que** les segments de mesure (62a, 62b, 62c ; 64a, 64b, 64c) sont constitués par des chambres de mesure (92) qui débouchent respectivement dans des raccords de mesure (96) à l'extrémité de mesure (66b), par l'intermédiaire d'un conduit creux (94), au niveau de leur face extrême éloignée de l'extrémité fermée (66a, 72a).

9. Four d'oxydation selon la revendication 8, **caractérisé par le fait que** les conduits creux (94) s'étendent coaxialement les uns aux autres et aux chambres de mesure (92a, 92b, 92c).

10. Four d'oxydation selon la revendication 7, **caractérisé par le fait que** les segments de mesure (62a, 62b, 62c ; 64a, 64b, 64c) sont matérialisés par la présence de plusieurs tubes d'accumulation (66) ou tubes de référence (72) qui sont agencés en juxtaposition mutuelle, avec des longueurs différentes, de façon telle qu'un tronçon mesureur (98) respectif, à l'extrémité fermée (66b, 72b) du tube d'accumulation (66) ou du tube de référence (72) considéré, présentant des d'orifices (68, 74), soit situé dans la chambre de traitement (28).

11. Four d'oxydation selon la revendication 10, **caractérisé par le fait que** les multiples tubes d'accumulation (66) ou tubes de référence (72) sont rectilignes ou coudés.

12. Four d'oxydation selon l'une des revendications 1 à 11, **caractérisé par** la présence d'au moins un ensemble de détection (54) comptant plusieurs dispositifs de détection (56) implantés dans plusieurs zones de détection (58), entre différents tapis de fibres (22a) voisins.

13. Four d'oxydation selon l'une des revendications 1 à 12, **caractérisé par** la présence d'au moins un ensemble de détection (54), comptant plusieurs dispositifs de détection (56) implantés dans des plages voisines de détection (58a, 58b) d'une zone de détection (58).

14. Four d'oxydation selon la revendication 12 ou 13, **caractérisé par le fait que** plusieurs dispositifs de détection (56) sont raccordés à une unité (102) de mesure groupée, avec faculté d'évaluation séquentielle, par l'intermédiaire d'un dispositif de distribution (104).

15. Four d'oxydation selon l'une des revendications 1 à 14, **caractérisé par le fait que** la chambre de traitement (28) comprend plusieurs secteurs (28a, 28b) dans lesquels l'atmosphère de travail (38) circule selon différentes directions principales de circulation, le profil de circulation de ladite atmosphère pouvant être respectivement instauré, de manière distincte, par l'intermédiaire du système (52) mesureur de défilement.

16. Four d'oxydation selon l'une des revendications 1 à 15, **caractérisé par** la présence dans une zone de détection (58), entre deux tapis de fibres (22a) voisins, d'éléments (88) de guidage d'air par l'intermédiaire desquels l'atmosphère de travail (38) est focalisée en direction du dispositif de détection (56).
